**Europäisches Patentamt**

**European Patent Office**

**Office européen des brevets**

(19)

(11) Numéro de publication : **0 495 759 A1**

(12) # DEMANDE DE BREVET EUROPEEN

(21) Numéro de dépôt : **92830011.0**

(22) Date de dépôt : **15.01.92**

(51) Int. Cl.⁵ : **G01S 13/89, G01S 13/93, G01S 7/292**

Priorité italienne No. FI91A10.

(30) Priorité : **17.01.91**

(43) Date de publication de la demande :
**22.07.92 Bulletin 92/30**

(84) Etats contractants désignés :
**DE FR GB IT SE**

(71) Demandeur : **SMA SEGNALAMENTOMARITTIMO ED AEREO S.P.A.**
**Via del Ferrone, 5**
**I-50124 Firenze (IT)**

(72) Inventeur : **Rossettini, Alessandro**
**Via Maffei, 38**
**I-50133 Firenze (IT)**
Inventeur : **Riccobono, Aldo**
**Via della Cooperazione, 33**
**I-50018 Scandicci (Firenze) (IT)**
Inventeur : **Lemmetti, Paolo**
**Plazza Togliatti**
**I-50018 Scandicci (Firenze) (IT)**

(74) Mandataire : **Martini, Lazzaro**
**Ufficio Brevetti Ing. Lazzaro Martini Via dei Rustici 5**
**I-50122 Firenze (IT)**

(54) **Procédé et appareillage pour l'extraction d'une carte des obstacles à partir du signal d'un détecteur radar à balayage avec transmission impulsionnelle, pour véhicule.**

(57) Pour l'extraction d'une carte des obstacle à partir du signal d'un détecteur radar a balayage avec transmission par impulsions, pour véhicule, on utilise un procédé et un appareillage qui comportent : le traitement analogique du signal d'écho radar à moyenne fréquence, qui consiste en une amplification à bande large, avec contrôle automatique du gain de type "gain variable en temps", suivie d'un filtrage passe-bande adapté à l'impulsion ; la détection vidéo ; le traitement numérique du signal vidéo, qui consiste à générer une carte binaire des détections d'un balayage radar au moyen d'une intégration "à fenêtre mobile" de séquences d'échantillons de l'écho radar quantifiés à un seul bit ; la mise en mémoire de ladite carte ; et l'élaboration de la liste des obstacles, qui consiste à relever la données de pointage du faisceau et à appliquer à la carte des détections une procédure "d'extraction des plots" en obtenant les données significatives de position en distance et en azimut et d'extension transversale des objets détectés par le détecteur radar.

Fig. 1

EP 0 495 759 A1

La présente invention concerne un procédé et un appareillage pour l'extraction d'une carte des obstacles à partir du signal d'écho d'un détecteur radar à impulsions qui explore l'espace au moyen du balayage d'un faisceau d'antenne étroit. Plus particulièrement, ledit procédé et ledit appareillage, utilisables dans des systèmes radar pour des applications à courte distance spécialement de type anticollision pour véhicule automobile, permettent d'extraire, à partir du signal analogique d'écho radar et de la donnée angulaire de pointage du faisceau, une carte numérique détaillée de la zone concernée par le balayage du faisceau, sous forme d'une liste d'obstables définis par la position angulaire par rapport au véhicule et par l'extension transversale. Ladite liste est spécialement utile, dans les systèmes anticollision, au cours de la phase d'élaboration des alarmes.

Il est tout à fait évident, dans ce domaine, qu'il est opportun de déterminer le plus exactement possible non seulement la position d'un éventuel obstacle, en termes de distance par rapport au véhicule et de l'angle par rapport à l'axe de celui-ci, mais aussi son extension transversale, de manière à représenter ou signaler avec une précision suffisante, sur des organes d'affichage ou d'alarme appropriés, les obstacles présents à proximité du véhicule.

Dans les systèmes radar pour anticollision pour véhicules, connus à ce jour, du type à détecteur radar à un seul faisceau fixe, la position des obstacles est déterminée uniquement en termes de distance par rapport au véhicule, ou encore, dans les systèmes utilisant plusieurs antennes ou plusieurs faisceaux fixes, également en termes d'angle par rapport à l'axe du véhicule. Mais même ces derniers systèmes, par ailleurs plus sophistiqués, dans lesquels la position angulaire de l'obstacle est relevée au moyen de techniques de type interférométrique, fournissent eux aussi une représentation approximative de la scène située devant le véhicule, à cause de la discrimination et de la sensibilité limitées dues à la technique employée, qui entre autre ne permet pas de déterminer, avec précision, les dimensions transversales de l'obstacle.

Il est également connu que des avantages considérables sont obtenus en utilisant, dans un système radar pour véhicule pour des applications à courte distance telles que l'anticollision, un détecteur radar à impulsions avec balayage, continu ou à pas finis au moyen d'un faisceau étroit, de l'espace à proximité du véhicule.

Les procédés et les dispositifs connus pour le traitement du signal d'écho d'un détecteur radar pour véhicule à impulsions à balayage, prévoient généralement d'effectuer les trois phases suivantes (sans considérer les phases de visualisation des obstacles détectés ou de traitement des alarmes du fait qu'elles ne sont pas modifiées par la présente invention):

— traitement analogique du signal radar converti à une fréquence plus basse, lequel est constitué par le filtrage pour le rejet du bruit et l'amplification et la conversion en bande de base vidéo (nécessaire si les opérations qui précèdent sont effectuées à la fréquence intermédiaire d'un systéme de réception de type superhétérodyne);

— traitement du signal vidéo, et éventuelle conversion analogique-numérique, et détection, dans le bruit, des échos radar engendrés par des obstacles effectivement présents, sur la base de l'observation du signal radar pour les différentes impulsions transmises ou sur la base de l'intégration, analogique ou numérique, des signaux relatifs à plusieurs impulsions émises successives;

— traitement numérique des données provenant de la détection des échos pour la localisation des obstacles en distance et en angle.

Ces procédés et dispositifs connus présentent cependant diverses limitations et inconvénients, spécialement s'ils sont appliqués à des systèmes anticollision pour véhicule, parmi lesquels:

— une discrimination en distance peu satisfaisante à cause de la dynamique d'entrée limitée du module de traitement analogique et de l'élargissement de l'impulsion d'écho provoqué par la cha ne de filtrage-amplification;

— une sensibilité limitée de détection des échos, dans le cas de l'analyse de séquences d'échantillons du signal vidéo, relatives à chaque impulsion transmise, et une complexité et un coût de fabrication élevés, dans le cas d'une intégration de séquences d'échantillons, relatives à plusieurs impulsions transmises successives, converties sous forme numérique à plusieurs bit;

— grande probabilité de non détection de plusieurs obstacles interceptés par le faisceau dans une position donnée, avec pour conséquence une reconstruction incomplète de la scène explorée par le radar, et possibilité limitée d'interprétation de l'évolution de la scène elle-même, dans le cas où, pour chaque impulsion transmise pendant le mouvement de balayage de l'antenne, on mesure la distance du premier écho radar, intercepté par le faisceau, qui dépasse un seuil déterminé;

— difficulté de gestion de situations avec plusieurs obstacles rapprochés, à cause de l'inadéquation des logiques d'association des détections radar aux barycentres des obstacles et de la non détermination de la donnée d'encombrement transversal de l'obstacle.

La présente invention a pour but de réaliser un procédé et un appareillage, applicables à des systèmes anticollision pour véhicules du type avec détecteur radar à impulsions à balayage, pour l'extraction, à partir du signal d'écho radar et de la donnée de pointage du faisceau, d'une carte des obstacles sous forme d'une liste d'objets définis par la position par rapport au véhicule et par l'extension transversale, et qui éliminent les inconvénients précités existant dans les systèmes connus.

Ce résultat a été atteint conformément à l'invention en utilisant un procédé, comprenant une première phase de traitement analogique du signal d'écho radar à moyenne fréquence et de détection vidéo, une deuxième phase de traitement numérique dudit signal vidéo pour la détection des échos radar dans le bruit et une troisième phase pour la production de la liste des obstacles, utile aux organes de traitement des alarmes du système, dans lequel:

   – le traitement analogique du signal d'écho à moyenne fréquence consiste dans une amplification à bande large, avec contrôle automatique du gain d'amplification du type "gain variable en temps" (Sensitivity Time Control: STC), suivie par un filtrage passe-bande;

   – le traitement du signal vidéo consiste dans la production d'une carte des détections relative à un balayage radar complet, au moyen d'une intégration "à fenêtre mobile" de séquences d'échantillons de l'écho radar quantifiés à un seul bit, et dans la mise en mémoire de cette carte;

   – la liste des obstacles est produite en relevant la donnée de pointage du faisceau et en effectuant sur la carte des détections une procédure "d'extraction des plots", comme spécifié dans le revendications, et elle est constituée par les données de position en distance et en azimut et d'extension transversale des objets détectés par le radar.

Un autre but de la présente invention est de réaliser un appareillage pour le traitement du signal d'écho d'un détecteur radar pour véhicule, à balayage avec transmission impulsionnelle, comprenant des moyens pour effectuer le traitement analogique du signal d'écho radar à moyenne fréquence, des moyens pour la détection vidéo, des moyens pour effectuer le traitement numérique dudit signal vidéo pour la détection des échos radar dans le bruit, des moyens pour produire la liste des obstacles, à transmettre aux organes de traitement des alarmes, et des moyens pour le synchronisme des unités de traitement, dans lequel:

   – les moyens pour effectuer le traitement analogique du signal d'écho radar à moyenne fréquence comprennent une cha ne d'amplificateurs à bande large, avec contrôle automatique de gain du type "STC", et un filtre passe-bande en suivant;

   – les moyens pour effectuer le traitement numérique du signal vidéo comprennent des dispositifs pour produire une carte des détections relatives à un balayage radar complet, au moyen de dispositifs pour l'intégration "à fenêtre mobile" de séquences d'échantillons de l'écho radar quantifiés à un seul bit, et un support pour la mise en mémoire de ladite carte;

   – les moyens pour produire la liste des obstacles comprennent des dispositifs pour la détection de la donnée de pointage du faisceau et des dispositifs pour "l'extraction des plots" de la carte des détections, comme spécifié dans les revendications.

Les avantages obtenus grâce à la présente invention consistent essentiellement en ce que:

   – le procédé et l'appareillage sont applicables à n'importe quel système radar pour véhicule du type à balayage avec transmission par impulsions, et permettent de déterminer avec précision, en plus de la position des obstacles en distance et en azimut, également leur dimension transversale;

   – le traitement analogique du signal d'écho radar possède une dynamique et une largeur de bande très élevées, ce qui permet, en maintenant la durée dans le temps du signal, d'obtenir la meilleure discrimination en distance pour une durée donnée de l'impulsion transmise, de prévenir les conditions de masquage dû à la présence d'un obstacle fortement réfléchissant à proximité d'un obstacle faiblement réfléchissant, de limiter la probabilité de saturation et, dans ce cas, de limiter au maximum ses effets, pour le rétablissement rapide des conditions normales qui limite l'extension de la zone d'obscurcissement, de réduire considérablement, grâce au circuit "STC", les faux échos provoqués par l'interception d'obstacles avec les lobes latéraux du faisceau d'antenne;

   – le traitement du signal vidéo est réalisé avec des moyens simples et de coût limité, il garantit une sensibilité et une fiabilité élevées dans la détection des échos, il permet de reconstruire avec précision l'évolution de la scène explorée par le radar et permet de limiter les quantités de données à mémoriser dans la carte des détections sans abaisser les probabilités de détection ni la précision azimutale;

   – le traitement numérique de la carte des détection permet d'obtenir une discrimination élevée des objets repérés par le détecteur radar et il est particulièrement efficace dans le cas de plusieurs obstacles rapprochés.

Ces avantages et caractéristiques de l'invention ainsi que d'autres seront plus et mieux compris de chaque homme du métier à la lumière de la description qui va suivre d'une forme de réalisation de l'invention, à considérer à titre d'exemplification et non dans le sens lòimitatif, et à l'aide des dessins annexés; sur lesquels:

   – la FIG. 1 représente un bloc-diagramme d'un appareillage conforme à l'invention;

   – la FIG. 2 représente un bloc-diagramme relatif à la partie de l'appareillage qui effectue le traitement analogique du signal et la détection vidéo;
– la FIG. 3 représente un bloc-diagramme relatif à la partie de l'appareillage qui effectue le traitement du signal vidéo et la production de la carte des détections d'un balayage;
– la FIG. 4 représente un organigramme de la procédure "d'extraction des plots" pour la détermination de la position et de l'extension transversale des obstacles.

Plus en particulier, le procédé conformément à l'invention, pour l'extraction de la liste des obstacles à partir de la donnée de pointage du faisceau et du signal d'écho radar prévoit, dans le cas d'un système radar avec récepteur du type superhétérodyne, de:

(a) amplifier le signal d'écho radar à moyenne fréquence, provenant du récepteur, en maintenant la raideur des fronts de l'impulsion (amplification à bande large) et en contrôlant automatiquement le gain d'amplification suivant une loi proportionnelle à $t^4$, avec t = temps de retour de l'écho radar;

(b) opérer sur le signal amplifié à moyenne fréquence un filtrage passe-bande adapté à l'impulsion pour permettre de faire prendre au rapport signal/bruit sa valeur maximale;

(c) convertir le signal en bande vidéo;

(d) amplifier le signal vidéo;

(e) quantifier en mode binaire le signal vidéo amplifié en comparant son amplitude avec une valeur de seuil S1;

(f) échantillonner le signal binaire à une fréquence appropriée, c'est-à-dire apte à récupérer aussi les impulsions de durée minimale qui peuvent se présenter à la sortie vidéo: cet échantillonnage produisant, pour chaque impulsion radar émise, une séquence de chiffres binaires qui représente l'évolution du signal d'écho quantifié durant la période pendant laquelle l'acquisition du signal vidéo radar est habilitée après chaque transmission d'impulsion et chaque chiffre binaire étant associé à une parmi plusieurs (par exemple 100) cellules de discrimination en distance (range gate) du radar;

(g) compter pour chaque bloc d'échantillons relatifs à la transmission d'un nombre N prédéterminé d'impulsions (par exemple 15) et pour chaque cellule de discrimination en distance, le nombre total d'échantillons non nuls obtenus;

(h) effectuer une intégration "à fenêtre mobile" sur les comptages relatifs à un nombre prédéterminé de blocs: cette procédure d'intégration consistant à:

(h') additionner, pour chaque cellule de discrimination en distance, la valeur résultant du comptage relatif à un bloc d'échantillons avec celui relatif à un ou plusieurs blocs d'échantillons précédents de manière que la somme $S_c$ détermine, pour chaque cellule en distance, le nombre total d'échantillons non nuls parmi les K*N échantillons examinés pour ladite cellule (avec K=nombre de blocs considérés pour l'intégration, par exemple 3), et

(h'') mettre à jour ladite somme $S_c$ après la transmission d'autres N impulsions, ou plus précisément dès que le résultat du comptage sur un nouveau bloc d'échantillons est disponible: la mise à jour consistant à soustraire le résultat relatif au bloc le plus ancien et à ajouter le résultat du nouveau bloc;

(i) produire la carte des détections d'un balayage en comparant la somme $S_c$ relative à chaque cellule de discrimination en distance, qui résulte de l'intégration à "fenêtre mobile", avec une valeur de seuil S2, avantageusement variable en fonction de la distance de la cellule de discrimination considérée, de manière que, si le nombre $S_c$ de dépassements du seuil vidéo S1 dans les K*N échantillons examinés dépasse la valeur de seuil S2, on associe alors à cette cellule de discrimination, pour la position azimutale moyenne du faisceau d'antenne pendant la transmission des K*N impulsions, un symbole binaire "1", en indiquant ainsi une "présence d'obstacle"; sinon on associe un symbole binaire "0", en indiquant ainsi une "absence d'obstacle". Cette opération est répétée pour toutes les cellules de discrimination en distance et pour toutes les cellules de discrimination en azimut définies, dans un balayage, par la direction moyenne du faisceau de rayonnement de l'antenne pendant la transmission de chaque bloc de N impulsions. En définitive, la carte binaire des détections ainsi produite est représentée par une matrice (matrice des détections) dont le nombre d'éléments est donné par le nombre des "range gate" (cellules en distance) multiplié par le nombre de cellules en azimut, obtenues à chaque balayage, par exemple 100*100;

(l) produire la liste des obstacles à travers une procédure de repérage des objets dans la carte des détections, procédure dite "d'extraction des plots" et effectuée, pour des valeurs d'azimut successives obtenues par exemple à partir d'un module de restitution angulaire, sur l'ensemble des cellules de discrimination en distance, c'est-à-dire sur la séquence, dite "batch", des "range gate" relatives à une cellule de discrimination en azimut déterminée: chaque "batch" étant représenté par un vecteur binaire (Vecteur Binaire des Détections, VBR) coïncidant, dans le cas où les lignes représentent les cellules en distance et les colonnes représentent celles en azimut, avec une des colonnes de ladite matrice des détections. En particulier, la procédure "d'extraction des plots" consiste à:

(l') activer, pour chaque cellule en distance contenant une détection non nulle, ce qu'on appelle une zone plot, jusqu'à un nombre maximum prédéterminé (par exemple 20), repérée par une série de paramètres destinés à déterminer le barycentre en distance et en azimut et la dimension transversale de l'obstacle (plot) et associée à une fenêtre de dimension prédéterminée en profondeur ou range (par exemple 4 "range gate"), ou bien vérifier l'appartenance de ladite cellule à une zone plot déjà activée à une autre cellule (zone plot ouverte) et mettre à jour les paramètres précités;

(I") déterminer ce qu'on appelle la fermeture de la zone plot dont les fenêtres en range associées ne comprennent pas un nombre suffisant d'éléments non nuls du VBR considéré;

(I''') calculer, pour chaque zone plot fermée, le barycentre en distance et en azimut et la dimension transversale du plot.

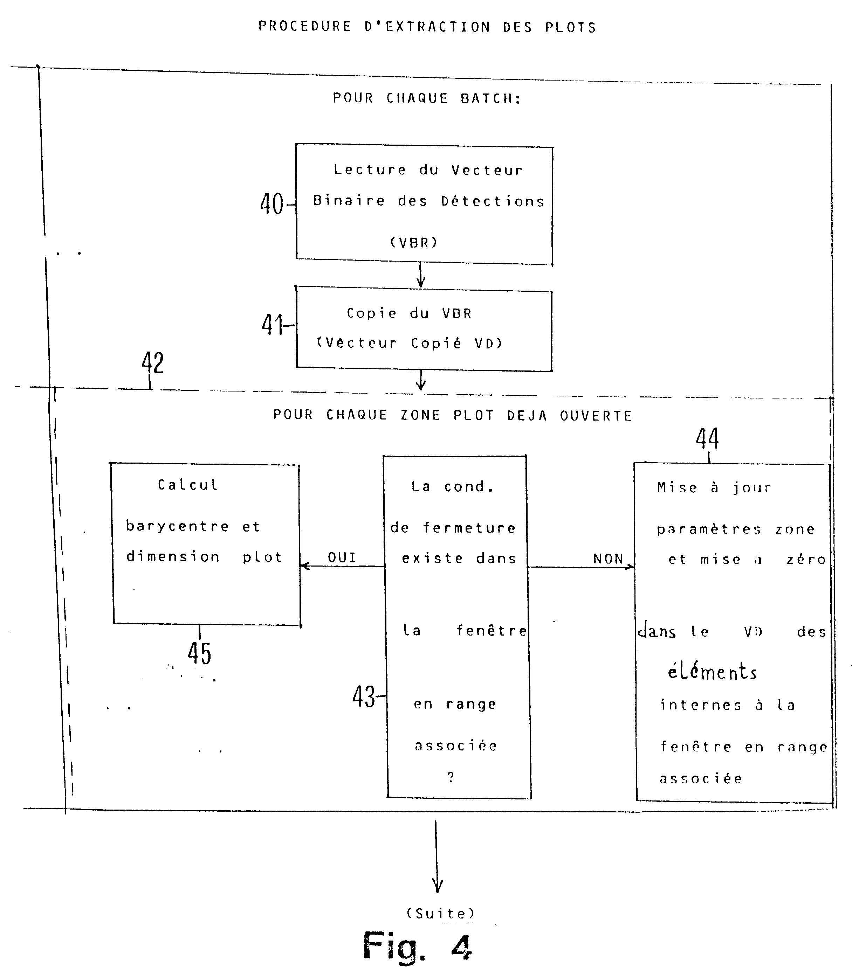

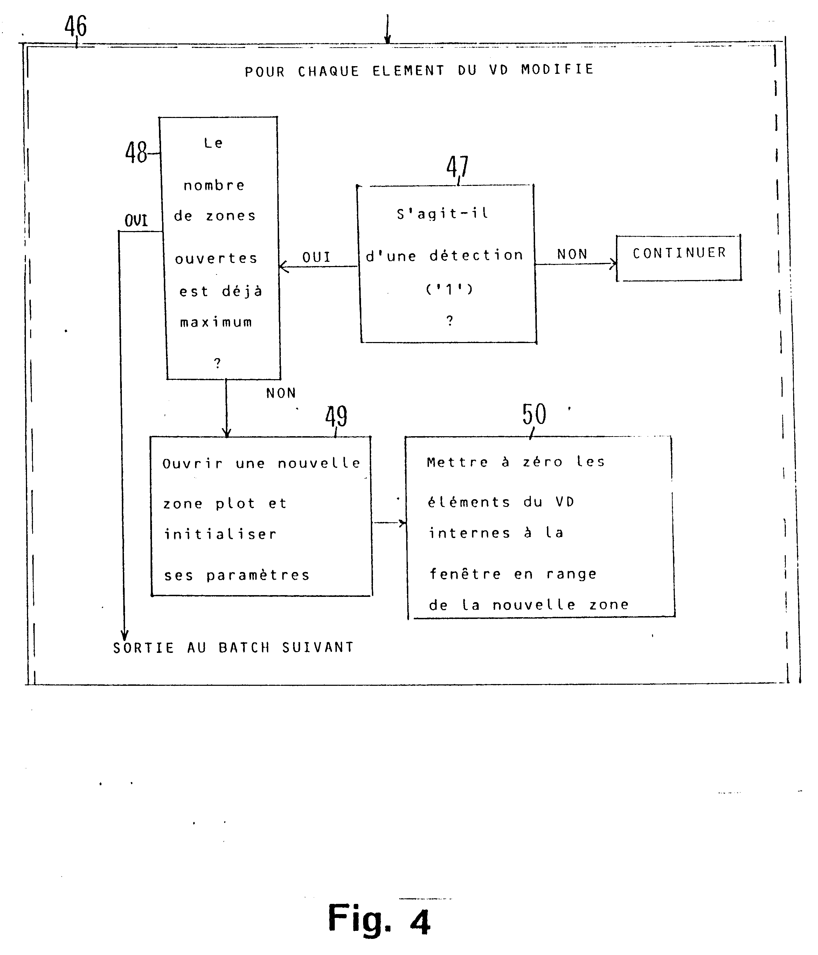

Selon une forme de réalisation préférée, la procédure "d'extraction des plots", conformément à l'invention et comme illustrée sur la fig. 4, comporte, pour chaque "batch":

(I) la lecture du vecteur binaire des détections VBR (bloc 40);

(II) la génération du vecteur VD, copie dudit vecteur VBR (bloc 41);

(III) le balayage des zones plot ouvertes (bloc 42) qui, pour chaque zone, comporte:

(IV) la vérification de la condition de fermeture de la zone (bloc 43), par exemple selon une configuration minimum de la séquence de symboles 1,0 du vecteur VBR à l'intérieur de la fenêtre en range associée à la zone examinée;

(V) la mise à jour des paramètres caractéristiques de la zone examinée et la mise à zéro dans le vecteur copié VD des éléments correspondant aux "range gate" internes à la fenêtre associée à la zone (bloc 44) en cas de résultat négatif de la vérification en (IV), ou bien

(VI) le calcul du barycentre et de la dimension transversale du plot (bloc 45) en cas de résultat positif de la vérification;

(VII) le balayage des éléments du vecteur copié VD, tel qu'éventuellement modifié en (V) (bloc 46) qui, pour chaque élément, comporte:

(VIII) un test pour le repérage des détections résiduelles (bloc 47);

(IX) le passage à l'élément suivant de VD en cas de résultat négatif du test en (VIII), ou bien

(X) la vérification de l'arrivée au nombre maximum autorisé pour les zones plot ouvertes (bloc 48);

(XI) le passage au "batch" suivant en cas de résultat positif de la vérification en (X), ou bien

(XII) l'ouverture une nouvelle zone plot et l'initialisation des paramètres caractéristiques correspondants (bloc 49) en cas de résultat négatif de la vérification;

(XIII) la mise à zéro des éléments de VD internes à la fenêtre en range associée à la nouvelle zone (bloc 50): au terme du balayage, le vecteur VD s'avère complètement remis à zéro.

Les paramètres associés à une zone plot sont avantageusement initialisés en (XII) et mis à jours en (V) sur la base du vecteur binaire des détections VBR et sont de préférence constitués par :

(11) une variable logique qui établit l'état ouvert/fermé de la zone (indicateur d'état);

(12) le range initial de la zone, déterminé par exemple par le range de la première détection diminué d'un "range gate";

(13) l'azimut initial, déterminé à l'ouverture de la zone;

(14) la somme des range, appartenant à la zone dans laquelle se produit une détection;

(15) la somme des azimuts multipliés par le nombre de détections en range;

(16) le nombre total des détections appartenant à la zone.

Pour tenir compte de l'élargissement auquel, pour différentes raisons, l'objet est soumis dans la carte des détections, on soustrait avantageusement à la largeur du plot relevée sur la carte des détections, une quantité fixe pour obtenir la largeur effective de l'obstacle.

La dimension en range des obstacles extraits, c'est-à-dire la profondeur, est par contre prédéterminée et elle est égale à quelques mètres. Ceci décrit complètement tout type d'obstacle typique des scénarios se présentant au-devant du véhicule.

De plus, la liste d'obstacles obtenue est directement associable à une image radar d'interprétation plus facile par rapport à la carte des détections. La disponibilité de la sortie à partir du radar, déjà sous forme de liste d'obstacles, est particulièrement avantageuse pour les traitements successifs des images radar, du fait qu'elle permet de réduire de manière draconienne le flux des données à gérer, pour chaque image radar, au moyen par exemple d'un microordinateur.

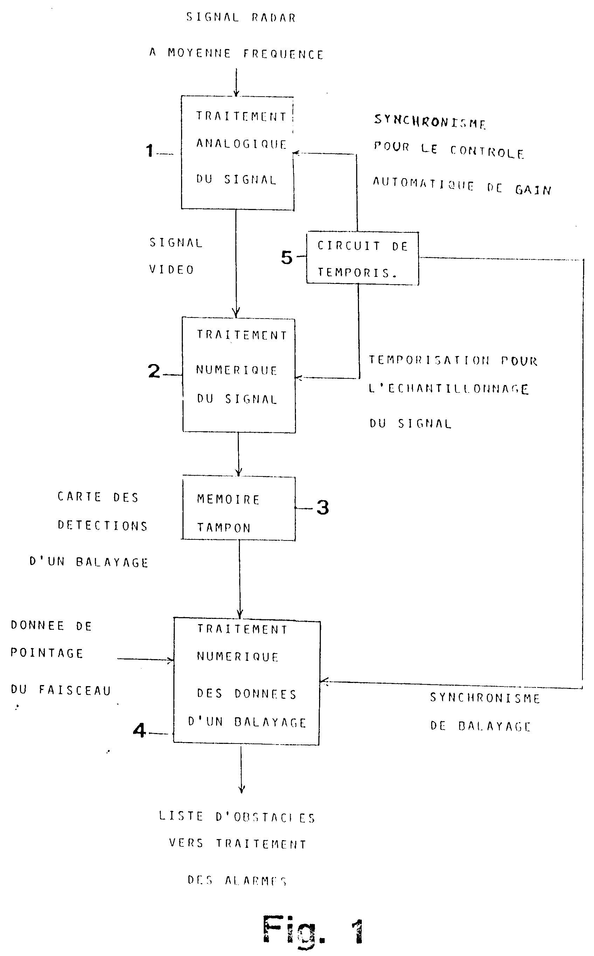

Pour ce qui concerne l'appareillage conforme à l'invention et en référence à la fig. 1, celui-ci comprend:

– une unité de traitement analogique 1 du signal radar à moyenne fréquence;

– une unité de traitement numérique 2 du signal vidéo;

– une mémoire tampon 3 de la carte des détections d'un balayage;

– une unité de traitement numérique 4 de la donnée de pointage du faisceau et des données de carte pour la production de la liste des obstacles, et

– un circuit de temporisation 5 qui fournit les synchronismes nécessaires aux unités de traitement.

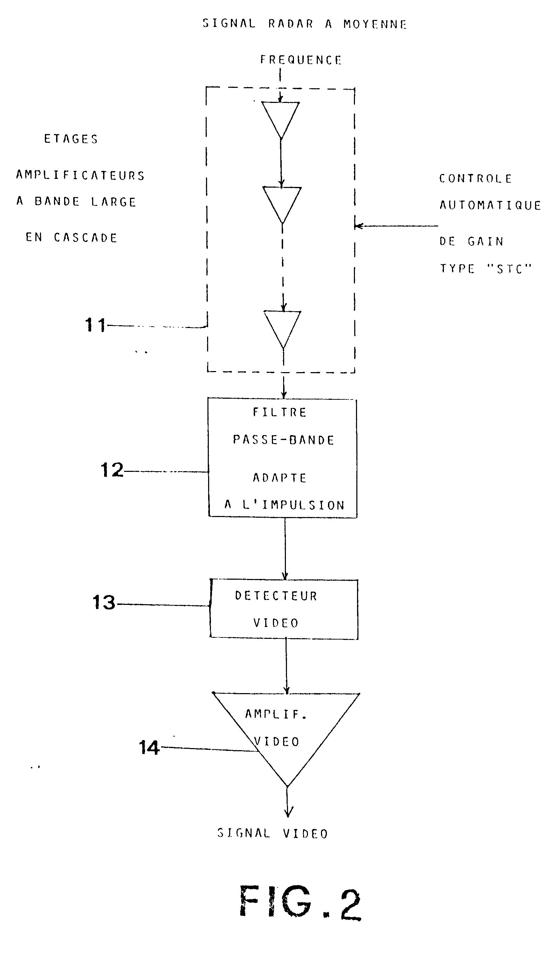

Plus en détail, et en référence à la fig. 2, l'unité de traitement analogique 1 du signal radar à moyenne fréquence comprend:

– une série 11 d'étages amplificateurs à bande large disposés en cascade, avec contrôle automatique du gain du type gain variable en temps ("Sensitivity Time Control"), et suivis de

– un filtre passe-bande 12 adapté à l'impulsion;

– un détecteur vidéo 13 et

– un amplificateur vidéo 14.

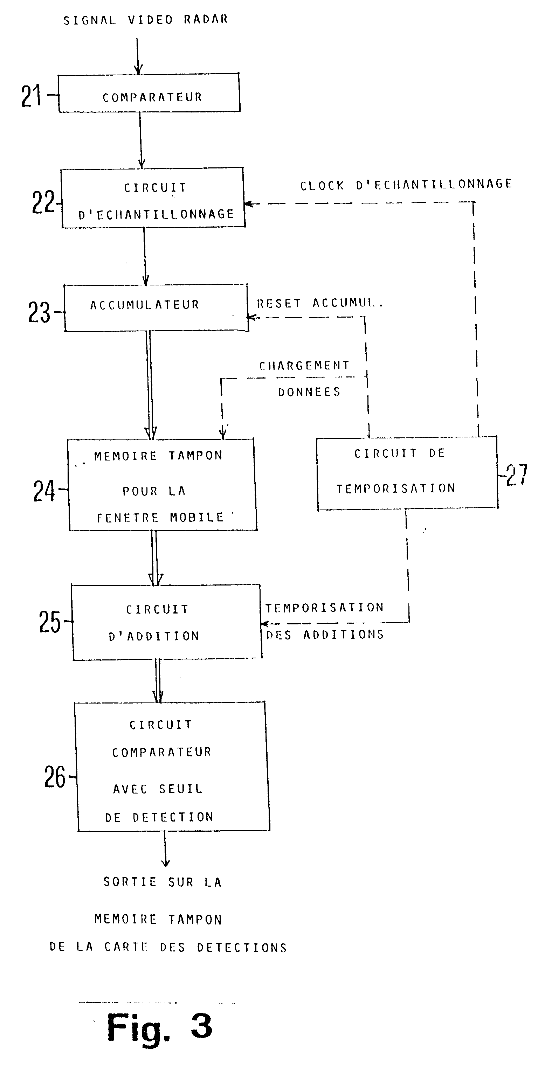

En référence à la fig. 3, l'unité de traitement numérique 2 du signal vidéo comprend:

– un comparateur 21 rapide à un seul seuil pour la quantification binaire du signal;

– un circuit d'échantillonnage 22;

– un accumulateur 23 pour le comptage sur les différents blocs d'échantillons;

– une mémoire tampon 24 et un circuit d'addition 25 pour la réalisation de la procédure d'intégration "à fenêtre mobile" sur les comptages;

– un circuit comparateur 26 avec seuil de détection, avantageusement variable, et

– un circuit de temporisation 27 qui fournit les synchronismes de traitement.

Avantageusement, le circuit de temporisation 27 représenté sur la fig. 3 coïncide avec le circuit de temporisation 5 représenté sur la fig. 1.

L'unité de traitement 4, représentée sur la fig. 1, est constituée par un microordinateur du type prévu pour le traitement des signaux numériques à grande vitesse, avantageusement intégré sur une seule puce, lequel comprend:

(i) des moyens pour la lecture la donnée de pointage du faisceau d'antenne, fournit par exemple par un module de restitution angulaire, et

(ii) des moyens (40-50) pour la production de la liste des obstacles à travers la procédure "d'extraction des plots", décrite ci-dessus en (I-XIII), à partir des données de la carte des détections lues dans la mémoire tampon 3.

## Revendications

**1)** Procédé pour l'extraction d'une carte des obstacles à partir du signal d'un détecteur radar à balayage avec transmission impulsionnelle pour véhicule, comprenant une première phase de traitement analogique du signal d'écho radar à moyenne fréquence et de détection vidéo, une deuxième phase de traitement numérique dudit signal vidéo pour la détection des échos radar dans le bruit et une troisième phase pour la production de la liste des obstacles, caractérisé en ce que ladite phase de traitement analogique du signal d'écho à moyenne fréquence consiste en une amplification à bande large, avec contrôle automatique du gain d'amplification du type "gain variable en temps" (STC), suivie par un filtrage passe-bande; que ladite phase de traitement du signal vidéo consiste dans la production d'une carte des détections relative à un balayage radar complet, au moyen d'une intégration "à fenêtre mobile" de séquences d'échantillons de l'écho radar quantifiés à un seul bit, et dans la mise en mémoire de cette carte; et en ce que la liste des obstacles est produite en relevant la donnée de pointage du faisceau et en effectuant sur la carte des protections une procédure "d'extraction des plots", et en ce qu'elle est constituée par les données de position en distance et en azimut et d'extension transversale des objets détectés par le radar.

**2)** Procédé selon la revendication 1, caractérisé en ce que ledit contrôle automatique du gain d'amplification est effectué suivant une loi proportionnelle à $t^4$, avec t=temps de retour de l'écho radar.

**3)** Procédé selon la revendication 1, caractérisé en ce que ledit filtrage passe-bande est adpaté à l'impulsion.

**4)** Procédé selon la revendication 1, caractérisé en ce que ladite phase de traitement du signal vidéo comporte de:

– quantifier en mode binaire le signal vidéo amplifié en comparant son amplitude avec une valeur de seuil S1;

– échantillonner le signal binaire à une fréquence appropriée, c'est-à-dire apte à récupérer aussi les impulsions de durée minimale qui peuvent se présenter à la sortie vidéo: chaque chiffre binaire obtenu dans la séquence relative à chaque impulsion transmise étant associé à une parmi plusieurs cellules de discrimination en distance (range gate) du radar ;

– compter pour chaque bloc d'échantillons relatifs à la transmission d'un nombre N prédéterminé d'impulsions et pour chaque cellule de discrimination en distance, le nombre total d'échantillons non nuls obtenus;

– effectuer une intégration "à fenêtre mobile" sur les comptages relatifs à un nombre K prédéterminé de blocs de manière à obtenir, pour chaque cellule de discrimination en distance, le nombre total $S_c$ d'échantillons non nuls parmi le K*N échantillons examinés pour ladite cellule;

– produire la carte des détections d'un balayage en comparant la valeur $S_c$ relative à chaque cellule de discrimination en distance, avec une valeur de seuil S2, de manière que, si le nombre $S_c$ de dépassements du seuil vidéo S1 dans les K*N échantillons examinés dépasse la valeur de seuil S2, on associe alors à cette cellule de discrimination, pour la position azimutale moyenne du faisceau d'antenne pendant la transmission des K*N impulsions, un symbole binaire "1"; sinon on associe un symbole binaire "0": cette opération étant répétée pour toutes les cellules de discrimination en distance et pour toutes les cellules de discrimination en azimut définies, dans un balayage, par la direction moyenne du faisceau de rayonnement de l'antenne pendant la transmission de chaque bloc de N impulsions.

**5)** Procédé selon la revendication 4, caractérisé en ce que ladite "intégration à fenêtre mobile" consiste à additionner, pour chaque cellule de discrimination en distance, la valeur résultant du comptage relatif à un bloc d'échantillons avec celui relatif à un ou plusieurs blocs d'échantillons précédents et à mettre à jour les sommes $S_c$ obtenues après la transmission de N autres impulsions, c'est-à-dire dès que le résultat du comptage sur un nouveau bloc d'échantillons est disponible: la mise à jour consistant à soustraire le résultat relatif au bloc le plus ancien et à ajouter le résultat du nouveau bloc.

**6)** Procédé selon la revendication 4, caractérisé en ce que ladite valeur de seuil S2 est variable en fonction de la distance de la cellule de discrimination considérée.

**7)** Procédé selon les revendications 1 et 4, caractérisé en ce que ladite carte des détections est représentée par une matrice binaire (matrice des détections).

**8)** Procédé selon la revendication 1, caractérisé en ce que ladite procédure "d'extraction des plots" est effectuée sur l'ensemble des cellules de discrimination en distance de ladite carte, c'est-à-dire sur la séquence, dite "batch", des "range gate" relatives à une cellule de discrimination en azimut déterminée, chaque "batch" étant représenté par un vecteur binaire VBR (Vecteur Binaire des Détections), et consiste à:

– activer une zone plot pour chaque cellule en distance contenant une détection non nulle et jusqu'à un nombre maximum prédéterminé, ladite zone étant repérée par une série de paramètres destinés à déterminer le barycentre en distance et en azimut et la dimension transversale de l'obstacle (plot) et étant associée à une fenêtre de dimension prédéterminée en profondeur ou range; ou bien vérifier l'appartenance de ladite cellule à une zone plot déjà activée (zone plot ouverte) et mettre à jour les paramètres précités;

– déterminer la fermeture des zones plot dont les fenêtres en range associées ne comprennent pas un nombre suffisant d'éléments non nuls du VBR considéré;

– calculer, pour chaque zone plot fermée, le barycentre en distance et en azimut et la dimension transversale du plot.

**9)** Procédé selon la revendication 8, caractérisé en ce que, pour chaque "batch", ladite procédure "d'extraction des plots" comporte:

– la lecture du vecteur binaire VBR de la carte des détections;

– la génération du vecteur VD, copie dudit vecteur VBR;

– le balayage des zones plot ouvertes, comportant pour chaque zone:

– la vérification de la condition de fermeture de la zone selon une configuration minimum de la séquence de symboles 1,0 du vecteur VBR à l'intérieur de la fenêtre en range associée à la zone examinée;

– la mise à jour des paramètres caractéristiques de la zone examinée et la mise à zéro dans le vecteur copié VD des éléments correspondant aux "range gate" internes à la fenêtre associée à la zone, en cas de résultat négatif de la vérification, ou bien le calcul du barycentre et de la dimension transversale du plot, en cas de résultat positif de la vérification;

– le balayage des éléments du vecteur copié VD, tel qu'éventuellement modifié, comportant pour chaque élément:

– un test pour le repérage des détections résiduelles;

– le passage à l'élément suivant de VD en cas de résultat négatif du test, ou bien la vérification de l'arrivée au nombre maximum autorisé pour les zones plot ouvertes;

– le passage au "batch" suivant en cas de résultat positif de la vérification, ou bien l'ouverture une nouvelle zone plot et l'initialisation des paramètres caractéristiques correspondants en cas de résultat négatif de la vérification;

– la mise à zéro des éléments de VD internes à la fenêtre en range associée à la nouvelle zone: au terme du balayage, le vecteur copié VD s'avérant completement remis à zéro.

**10)** Procédé selon la revendication 9, caractérisé en ce que lesdits paramètres qui repèrent une zone plot sont initialisés et mis à jour sur la base du vecteur binaire des détections VBR.

**11)** Procédé selon la revendication 9, caractérisé en ce que lesdits paramètres sont constitués par une variable logique qui établit l'état ouvert/fermé de la zone plot (indicateur d'état), le range initial de la zone, l'azimut initial, la somme des range appartenant à la zone dans lesquels se produit une détection, la somme des azimuts multipliés par le nombre de détections en range, le nombre total des détections appartenant à la zone.

**12)** Procédé selon la revendication 1, caractérisé en ce que à la largeur du plot obtenu à partir de la carte des détections est soustraite un quantité fixe pour obtenir la largeur effective de l'obstacle.

**13)** Appareillage pour le traitement du signal d'écho d'un détecteur radar à balayage avec transmission impulsionnelle pour véhicule, selon le procédé d'une ou plusieurs des revendications précédentes, comprenant des moyens (11,12) pour effectuer le traitement analogique du signal d'écho radar à moyenne fréquence, des moyens (13,14) pour la détection vidéo, des moyens (2,3) pour effectuer le traitement numérique dudit signal vidéo pour la détection des échos radar dans le bruit, des moyens (4) pour produire la liste des obstacles, et des moyens (5) pour le synchronisme des unités de traitement, caractérisé en ce que lesdits moyens (11,12) pour effectuer le traitement analogique du signal d'écho radar à moyenne fréquence comprennent une cha ne d'amplificateurs (11) à bande large, avec contrôle automatique de gain du type "STC", et un filtre passe-bande (12) en suivant; en ce que lesdits moyens (2,3) pour effectuer le traitement numérique du signal vidéo comprennent des moyens (2) pour produire une carte binaire des détections relatives à un balayage radar complet et un support (3) pour la mise en mémoire de ladite carte; et en ce que lesdits moyens (4) pour produire la liste des obstacles comprennent des moyens pour la lecture de la donnée de pointage du faisceau d'antenne et des moyens (40-50) pour la production de la liste des obstacles à travers la procédure "d'extraction des plots" à partir des données de la carte des détections lues dans ladite mémoire (3).

**14)** Appareillage selon la revendication 13, caractérisé en ce que lesdits moyens (2) jour la production de la carte des détections comprennent : un comparateur (21) rapide à un seul seuil pour la quantification binaire du signal, un circuit d'échantillonnage (22), un accumulateur (23) pour le comptage sur les différents blocs d'échantillons, une mémoire tampon (24) associée à un circuit d'addition (25) pour la réalisation de la procédure d'intégration "à fenêtre mobile" sur les comptages; un circuit comparateur (26) avec seuil de détection, et un circuit de temporisation (27) pour fournir les synchronismes de traitement.

**15)** Appareillage selon la revendication 13, caractérisé en ce que lesdits moyens (4) pour produire la liste des obstacles comprennent un microordinateur du type prévu pour le traitement des signaux numériques à grande vitesse, intégré sur une seule puce.

**16)** Appareillage selon la revendication 14, caractérisé en ce que le seuil de détection dudit circuit comparateur (26) est variable en fonction de la distance de l'éventuel obstacle.

**17)** Appareillage selon les revendications 13 et 14, caractérisé en ce que ledit circuit de temporisation (27) remplit les fonctions desdits moyens (5) pour le synchronisme des unités de traitement.

SIGNAL RADAR

A MOYENNE FREQUENCE

```
            │
            ▼
    ┌──────────────┐
    │  TRAITEMENT  │        SYNCHRONISME
1 ──│  ANALOGIQUE  │◄────   POUR LE CONTROLE
    │  DU SIGNAL   │        AUTOMATIQUE DE GAIN
    └──────────────┘
            │
            ▼
   SIGNAL          ┌──────────────┐
   VIDEO        5  │ CIRCUIT DE   │
                ── │ TEMPORIS.    │
                   └──────────────┘
            │
            ▼
    ┌──────────────┐
    │  TRAITEMENT  │
2 ──│  NUMERIQUE   │◄────   TEMPORISATION POUR
    │  DU SIGNAL   │        L'ECHANTILLONNAGE
    └──────────────┘        DU SIGNAL
            │
            ▼
  CARTE DES     ┌──────────────┐
                │  MEMOIRE     │── 3
  DETECTIONS    │  TAMPON      │
                └──────────────┘
  D'UN BALAYAGE
            │
            ▼
 DONNEE DE     ┌──────────────┐
               │  TRAITEMENT  │
 POINTAGE   ──►│  NUMERIQUE   │
               │  DES DONNEES │◄──   SYNCHRONISME
 DU FAISCEAU   │  D'UN BALAYAGE│     DE BALAYAGE
               └──────────────┘
          4 ──
            │
            ▼
```

LISTE D'OBSTACLES

VERS TRAITEMENT

DES ALARMES

# Fig. 1

SIGNAL RADAR A MOYENNE

FREQUENCE

ETAGES

AMPLIFICATEURS

A BANDE LARGE

EN CASCADE

CONTROLE

AUTOMATIQUE

DE GAIN

TYPE "STC"

**11**

FILTRE

PASSE-BANDE

**12**

ADAPTE

A L'IMPULSION

**13** DETECTEUR

VIDEO

AMPLIF.

VIDEO

**14**

SIGNAL VIDEO

# FIG.2

SIGNAL VIDEO RADAR

21 — COMPARATEUR

22 — CIRCUIT D'ECHANTILLONNAGE          CLOCK D'ECHANTILLONNAGE

23 — ACCUMULATEUR          RESET ACCUMUL.

CHARGEMENT

DONNEES

24 — MEMOIRE TAMPON POUR LA FENETRE MOBILE          CIRCUIT DE TEMPORISATION — 27

25 — CIRCUIT D'ADDITION          TEMPORISATION DES ADDITIONS

26 — CIRCUIT COMPARATEUR AVEC SEUIL DE DETECTION

SORTIE SUR LA

MEMOIRE TAMPON

DE LA CARTE DES DETECTIONS

# Fig. 3

PROCEDURE D'EXTRACTION DES PLOTS

POUR CHAQUE BATCH:

40 — Lecture du Vecteur
Binaire des Détections
(VBR)

41 — Copie du VBR
(Vecteur Copié VD)

42

POUR CHAQUE ZONE PLOT DEJA OUVERTE

44

Calcul
barycentre et
dimension plot

OUI

La cond.
de fermeture
existe dans

la fenêtre

43 — en range
associée
?

NON

Mise à jour
paramètres zone
et mise à zéro

dans le VD des
éléments
internes à la
fenêtre en range
associée

45

(Suite)

# Fig. 4

12

**POUR CHAQUE ELEMENT DU VD MODIFIE**

46

47

48 Le nombre de zones ouvertes est déjà maximum ?

S'agit-il d'une détection ('1') ?

OUI → CONTINUER (NON)

OUI

OUI

NON

NON

49 Ouvrir une nouvelle zone plot et initialiser ses paramètres

50 Mettre à zéro les éléments du VD internes à la fenêtre en range de la nouvelle zone

SORTIE AU BATCH SUIVANT

# Fig. 4

**Office européen des brevets**

# RAPPORT DE RECHERCHE EUROPEENNE

Numero de la demande

EP 92 83 0011

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | ELECTRICAL COMMUNICATION. vol. 39, no. 4, 1964, BRUSSELS BE pages 481 - 487; K. MELLBERG: 'Digitrac Video Correlator for Binary Detection of Radar Targets' | 1 | G01S13/89 G01S13/93 G01S7/292 |
| A | * page 483, alinéa 4 - page 485, alinéa 5 * | 4,7,13, 16 | |
| | --- | | |
| Y | MIKROWELLEN MAGAZIN vol. 8, no. 4, Août 1982, COBURG, DE pages 426 - 429; A. BUCHER ET AL.: 'Ein Abstandwarngerät für Kraftfahrzeuge in 35 GHz Impulstechnik' | 1 | |
| A | * page 427, alinéa 3.1; figure 2 * | 2,13 | |
| | --- | | |
| A | RADIOELECTRONICS AND COMMUNICATIONS SYSTEMS. vol. 29, no. 4, 1986, NEW YORK US pages 1 - 14; P. A. BAKULEV ET AL.: 'Features of Signal Processing in Modern Surveillance Radars (a review)' * page 7, ligne 49 - ligne 57 * | 2 | |
| | --- | | **DOMAINES TECHNIQUES RECHERCHES (Int. Cl.5)** |
| A | M. SKOLNIK 'Introduction to Radar Systems' 1981 , MCGRAW-HILL , SINGAPORE * page 369, alinéa 10.2 - page 375 * | 3 | G01S |
| | --- | | |
| A | DE-A-2 908 261 (STANDARD ELEKTRIK LORENZ) * revendication 1 * | 6 | |
| | --- | | |
| A | EP-A-0 089 712 (HOLLANDSE SIGNAALAPPARATEN) * abrégé * * revendications 1,3 * | 8,9 | |
| | ----- | | |

Le présent rapport a été établi pour toutes les revendications

| Lieu de la recherche | Date d'achèvement de la recherche | Examinateur |
|---|---|---|
| LA HAYE | 28 AVRIL 1992 | Francesco Zaccà |